# EUROPEAN PATENT APPLICATION

(11) **EP 3 854 534 A1**
(43) Date of publication of application: **28.07.2021**
(21) Application number: 20211304.9
(22) Date of filing: 02.12.2020
(51) Int. Cl.: B25J 9/16

(54) **CONTROL METHOD AND CONTROL DEVICE FOR MOBILE ROBOT, AND ROBOT SYSTEM**

(30) Priority: 23.01.2020 JP 2020008947
(71) Applicant: Seiko Epson Corporation, Tokyo 160-8801 (JP)
(72) Inventor: KANAI, Hiroyuki, Suwa-shi,, Nagano 392-8502 (JP)
(74) Representative: MERH-IP Matias Erny Reichl Hoffmann Patentanwälte PartG mbB

(57) **Abstract**

A control method includes: a step A of calculating a work posture of a mobile robot with respect to a target object at a plurality of stop candidate positions within a stop error range centered on a target stop position; and a step B of changing the target stop position when the mobile robot is unable to take a controllable work posture at at least one stop candidate position of the plurality of stop candidate positions.

## Description

The present application is based on, and claims priority from JP Application Serial Number 2020-008947, filed January 23, 2020, the disclosure of which is hereby incorporated by reference herein in its entirety.

### BACKGROUND

### 1. Technical Field

The present disclosure relates to a mobile robot including a manipulator mounted on a moving pedestal.

### 2. Related Art

JP-A-2018-122399 discloses a method of creating a movement route plan for a mobile robot including an arm portion mounted on a moving pedestal such as a dolly. In the following description, the arm portion or the robot transported by the moving pedestal is also referred to as a "manipulator". The mobile robot can perform work on a plurality of target objects placed at a plurality of places. At this time, the mobile robot moves to and stops at a target stop position in a vicinity of each target object, and performs work on each target object.

However, an actual stop position of the mobile robot may deviate from a preset target stop position, and the mobile robot cannot take a controllable work posture with respect to the target object.

### SUMMARY

A first aspect of the present disclosure provides a control method for a mobile robot including a moving pedestal and a manipulator mounted on the moving pedestal. The control method includes: a step A of calculating, using a target stop position of the mobile robot for performing work on a target object, a stop error of the mobile robot, and a position of the target object, a work posture of the mobile robot with respect to the target object at a plurality of stop candidate positions within a stop error range centered on the target stop position; and a step B of changing the target stop position when the mobile robot is unable to take a controllable work posture at at least one stop candidate position among the plurality of stop candidate positions.

A second aspect of the present disclosure provides a control device for controlling a mobile robot including a moving pedestal and a manipulator mounted on the moving pedestal. The control device includes: a posture calculation unit that calculates, using a target stop position of the mobile robot for performing work on a target object, a stop error when movement of the mobile robot is stopped, and a position of the target object, a work posture of the mobile robot with respect to the target object at a plurality of stop candidate positions within a stop error range centered on the target stop position; and a position changing unit that changes the target stop position when the mobile robot is unable to take a controllable work posture at at least one stop candidate position among the plurality of stop candidate positions.

A third aspect of the present disclosure provides a robot system including a mobile robot including a moving pedestal and a manipulator mounted on the moving pedestal, and a control device that controls the mobile robot. The control device includes: a posture calculation unit that calculates, using a target stop position of the mobile robot for performing work on a target object, a stop error when movement of the mobile robot is stopped, and a position of the target object, a work posture of the mobile robot with respect to the target object at a plurality of stop candidate positions within a stop error range centered on the target stop position; and a position changing unit that changes the target stop position when the mobile robot is unable to take a controllable work posture at at least one stop candidate position among the plurality of stop candidate positions.

### BRIEF DESCRIPTION OF THE DRAWINGS

FIG. 1 is a conceptual diagram of a robot system.
FIG. 2 is an explanatory diagram showing a storage shelf that stores target objects.
FIG. 3 is an explanatory diagram showing functions of control devices of the robot system.
FIG. 4 is a flowchart of work involving resetting of a target stop position in a first embodiment.
FIG. 5 is an explanatory diagram showing a stop error range centered on the target stop position.
FIG. 6 is an explanatory diagram showing a state in which the target stop position is changed.
FIG. 7 is a flowchart of work involving resetting of a target stop position in a second embodiment.

### DESCRIPTION OF EXEMPLARY EMBODIMENTS

### A. First Embodiment

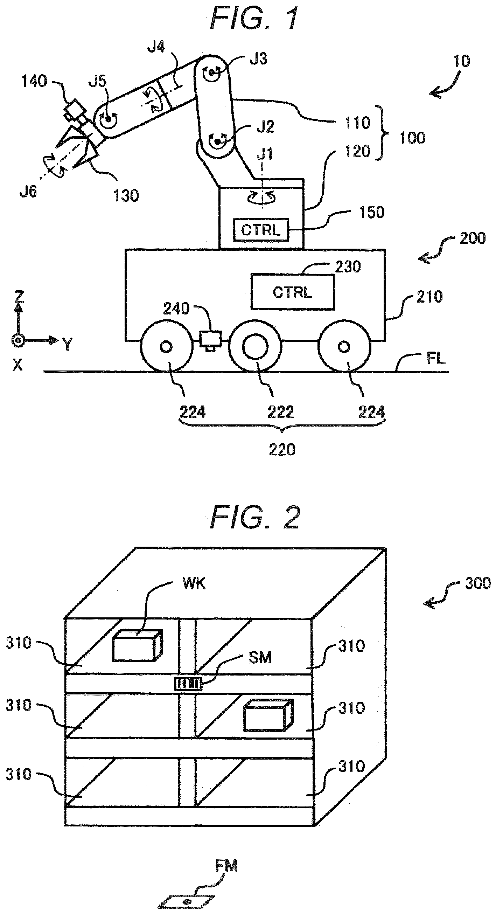

FIG. 1 is a conceptual diagram of a robot system 10 according to an embodiment of the present disclosure. The robot system 10 is a mobile robot including a manipulator 100 and a moving pedestal 200. In FIG. 1, three coordinate axes X, Y, Z of a robot coordinate system are shown. An origin of the robot coordinate system can be provided at any position of the robot system 10, but is drawn outside the robot system 10 in FIG. 1 for convenience of illustration.

The manipulator 100 includes an arm 110 and a base 120. An end effector 130 such as a hand and a camera 140 are attached to a tip portion of the arm 110. The camera 140 can be used to detect a current position, or a position and a posture of a target object that is a work target of the end effector 130. The base 120 is fixed to the moving pedestal 200. The base 120 is provided with a control device 150 that controls the manipulator 100. In this example, the manipulator 100 is a 6-axis robot including 6 axes J1 to J6. However, as the manipulator 100, one including at least one axis can be used. In the present embodiment, a vertical articulated robot is assumed as the manipulator 100, but the manipulator 100 is not limited thereto. For example, a horizontal articulated robot may be used. In addition, there may be a plurality of manipulators 100.

The moving pedestal 200 includes a main body 210 and wheels 220 provided on a lower portion of the main body 210. The wheels 220 include two drive wheels 222 and four driven wheels 224, half of which are drawn in FIG. 1. The main body 210 is provided with a control device 230 that controls the moving pedestal 200. A camera 240 is provided in the lower portion of the main body 210. The camera 240 can be used to detect a current position of the moving pedestal 200. The moving pedestal 200 is a mobile transport vehicle that autonomously travels on a floor surface FL. As a drive system of the moving pedestal 200, instead of a two-wheel speed difference system using the two drive wheels 222, an omnidirectional movement system called a mecanum may be used.

The control device 230 of the moving pedestal 200 and the control device 150 of the manipulator 100 control the robot system 10 while communicating with each other. That is, it can be considered that the two control devices 150 and 230 form a control device that executes overall control of the robot system 10. In other embodiments, a single control device that executes the overall control of the robot system 10 may be used. A term "robot control device" is meant to include both of these configurations.

FIG. 2 is an explanatory diagram showing a storage shelf 300 that stores target objects WK. The storage shelf 300 includes a plurality of storage spaces 310, and each storage space 310 can store one target object WK. The target object WK is also referred to as "work WK". On a floor surface in front of the storage shelf 300, a floor marker FM serving as an indication of a stop position is displayed. On the storage shelf 300, a shelf marker SM indicating a storage shelf ID for distinguishing the storage shelf 300 from other storage shelves is displayed. The target object WK may be arranged in a place other than the storage shelf 300. In addition, a plurality of target objects WKs may be stored in each storage space 310. In this case, the position or the position and posture of the target object WK in each storage space 310 may be known in advance.

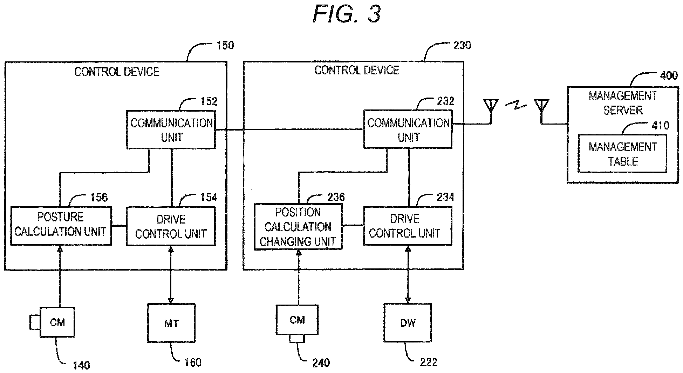

FIG. 3 is an explanatory diagram showing functions of the control devices 150 and 230 of the robot system 10. As described above, the functions of the respective units of the control devices 150 and 230 shown in FIG. 3 may be implemented in the single control device.

As shown in FIG. 3, an entire system configuration of this embodiment includes a management server 400 that transmits and receives various types of information to and from the control device 230 via wireless communication. The management server 400 includes a management table 410 for managing work information related to work on the target object WK. The work information includes information indicating a work position, which is a position where the robot system 10 performs work on the target object WK, and information indicating the position or the position and posture of the target object WK. The information indicating the position of the target object WK is, for example, information indicating a positional relationship between the floor marker FM and the target object WK, or information indicating a positional relationship between the shelf marker SM and the target object WK. Alternatively, the position of the target object WK may be represented by coordinate values in a world coordinate system. The posture of the target object WK is how the work is placed in a three-dimensional coordinate system.

The control device 150 of the manipulator 100 includes a communication unit 152, a drive control unit 154, and a posture calculation unit 156. The communication unit 152 communicates with the control device 230 of the moving pedestal 200 to transmit and receive the various types of information. The drive control unit 154 executes drive control of a motor 160 provided on each axis of the manipulator 100.

The posture calculation unit 156 calculates a work posture of the manipulator 100 when the manipulator 100 performs work on the target object WK. The calculation of the work posture is a processing of calculating displacement of each axis of the manipulator 100 by using inverse kinematics based on the position and posture that a tool center point (TCP) of the manipulator 100 needs to take. The position and the posture that the TCP needs to take is determined based on the relationship between the position of the robot system 10 and the position or the position and posture of the target object WK.

The control device 230 of the moving pedestal 200 includes a communication unit 232, a drive control unit 234, and a position calculation changing unit 236. The communication unit 232 communicates with the control device 150 of the manipulator 100 and the management server 400 to transmit and receive various types of information. The drive control unit 234 executes drive control of the drive wheels 222 of the moving pedestal 200.

The position calculation changing unit 236 calculates a position of the moving pedestal 200 in the world coordinate system. In addition, the position calculation changing unit 236 sets the work position as a target stop position which is a target position where the moving pedestal 200 stops after moving. If necessary, the target stop position of the moving pedestal 200 is changed to a new target stop position different from the target stop position, and the new target stop position is set as the target stop position. The position calculation changing unit 236 corresponds to a "position changing unit". In the following description, a "position of the moving pedestal 200" and a "position of the robot system 10" are synonymous.

The management server 400 notifies the control device 230 of the moving pedestal 200 of the work position of the moving pedestal 200 for the robot system 10 to perform work on the target object WK. The position calculation changing unit 236 sets the notified work position as the target stop position of the moving pedestal 200. The drive control unit 234 of the control device 230 uses the target stop position and the current position of the moving pedestal 200 to execute control of movement and stop of the moving pedestal 200.

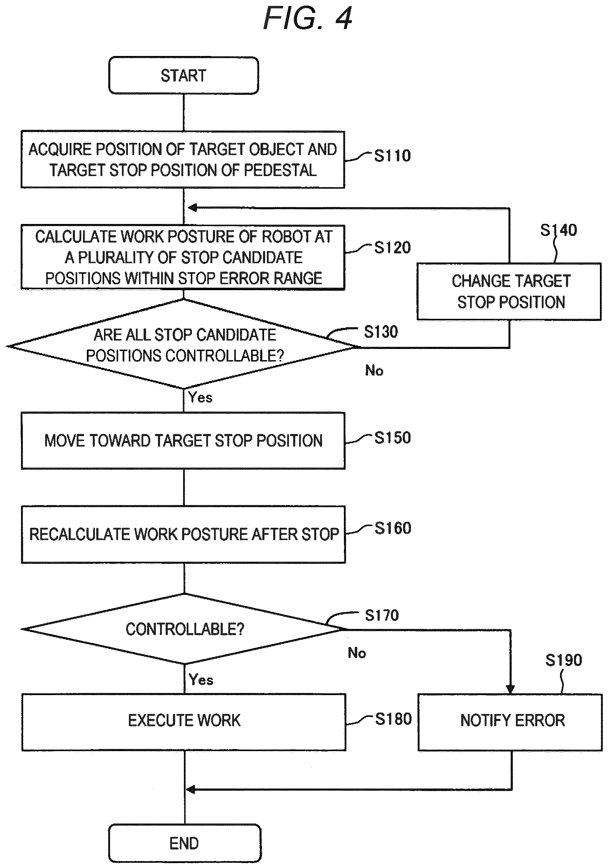

FIG. 4 is a flowchart of work involving resetting of the target stop position in a first embodiment. The processing is executed by the control devices 150 and 230 of the robot system 10. The processing of FIG. 4 is started in a state where the moving pedestal 200 is stopped before the robot system 10 moves toward the target stop position for performing work on the target object WK.

In step S110, the communication unit 230 acquires work information including the work position of the moving pedestal 200 and the position or the position and posture of the target object WK from the management server 400. Then, the position calculation changing unit 236 sets the acquired work position as the target stop position. In step S120, the posture calculation unit 156 sets a stop error range centered on the target stop position, and calculates the work posture of the manipulator 100 with respect to the target object WK based on the work information acquired from the management server 400 at a plurality of stop candidate positions within this stop error range. At this time point, since the robot system 10 is in a position away from the target object WK, the calculation in step S120 is a simulation.

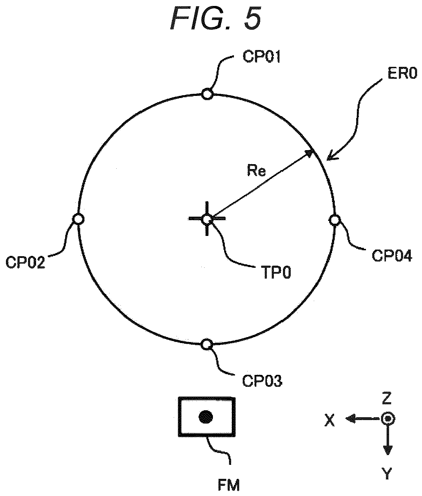

FIG. 5 is an explanatory diagram showing a stop error range ER0 centered on a target stop position TP0. The stop error range ER0 is a circular region centered on the target stop position TP0 and having a radius of a stop error Re of the moving pedestal 200. The stop error Re is a value obtained empirically or experimentally, and is about 4 to 6 cm, for example. A positional relationship between the target stop position TP0 and the floor marker FM is calculated based on a positional relationship between the work position and the floor marker FM acquired as the work information from the management server 400. A plurality of stop candidate positions CP01 to CP04 are selected as representative positions within the stop error range ER0. In an example of FIG. 5, the four stop candidate positions CP01 to CP04 are set at equal intervals on an outer circumference of the stop error range ER0. If the stop error Re of the moving pedestal 200 is considered, an actual stop position of the moving pedestal 200 may be any of these stop candidate positions CP01 to CP04. Therefore, in step S120, the posture calculation unit 156 calculates the work posture of the manipulator 100 with respect to the target object WK at each of these stop candidate positions CP01 to CP04. As described above, the calculation of the work posture is the processing of calculating the displacement of each axis of the manipulator 100 by using the inverse kinematics based on the position and posture that the TCP of the manipulator 100 needs to take. In a case where the end effector 130 is a hand for holding the target object WK, the "position and posture that the TCP needs to take" is, for example, the position and posture in which the hand holds the target object WK. It is preferable that the work position and the floor marker FM match. Therefore, teaching of the robot system 10 is simplified.

In step S130, it is determined whether the manipulator 100 can take a controllable work posture at all the stop candidate positions CP01 to CP04. The "controllable work posture" means that the end effector 130 of the manipulator 100 can reach the target object WK and the posture of the manipulator 100 is a posture that is not a so-called singular point. As is well known, the singular point means a posture in which the manipulator 100 cannot be controlled due to a structural restriction. For example, a posture in which two or more axes are aligned on a straight line is the singular point since the displacements of those axes cannot be determined.

When the manipulator 100 can take the controllable work posture at all the stop candidate positions CP01 to CP04, the processing proceeds to step S150 to be described later. On the other hand, when the manipulator 100 cannot take the controllable work posture at at least one stop candidate position, the processing proceeds to step S140, and the position calculation changing unit 236 changes the target stop position from an initial target stop position TP0 to a new target stop position TP1. That is, when step 140 ends, the new target stop position TP1 is set to the target stop position. Hereinafter, changing the target stop position from the target stop position TP0 to the new target stop position TP1 may be expressed as "change of the target stop position" or "changing the target stop position".

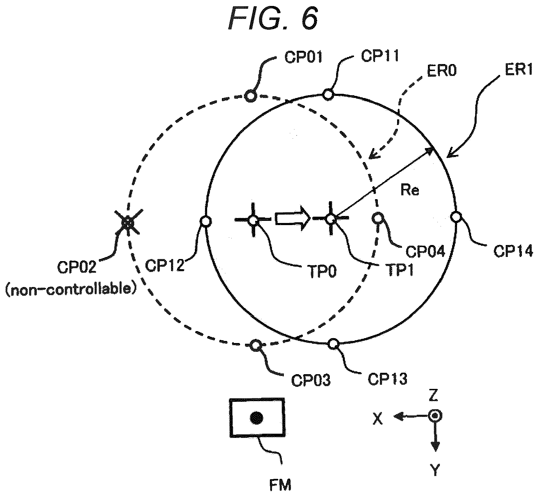

FIG. 6 is an explanatory diagram showing a state in which the target stop position TP0 is changed to the new target stop position TP1. In this example, it is determined that the manipulator 100 cannot take the controllable work posture at one stop candidate position CP02 within the stop error range ER0 centered on the first target stop position TP0. The new target stop position TP1 is set such that a stop error range ER1 centered on the new target stop position TP1 does not include the stop candidate position CP02 where the controllable work posture cannot be taken. In this new stop error range ER1, a plurality of stop candidate positions CP11 to CP14 are also set.

The target stop position is preferably changed such that the robot system 10 approaches the target object WK. A change width of the target stop position may be set to a preferable value obtained empirically, or may be determined using a calculation result of the work posture in step S120. For example, when the end effector 130 does not reach the target object WK in the calculation result of the work posture, the target stop position can be changed by predicting a position where the end effector 130 reaches the target object WK. When the target stop position is changed, an orientation of the moving pedestal 200 with respect to the target object WK may be changed.

When the change of the target stop position in step S140 is ended, the processing returns to step S120, and steps S120, S130, and S140 described above are repeated. In this way, the posture calculation unit 156 and the position calculation changing unit 236 resets the target stop position by repeating the calculation of the work posture and the change of the target stop position until the manipulator 100 can take the controllable work posture at the plurality of stop candidate positions.

In step S150, the moving pedestal 200 starts moving toward the target stop position. In step S160, after the moving pedestal 200 stops at the target stop position, the posture calculation unit 156 recalculates the work posture of the manipulator 100 using the current position of the moving pedestal 200. A reason why the work posture is recalculated here is that the current position of the moving pedestal 200 after the stop may be deviated from the target stop position. The current position of the target object WK in the robot coordinate system is used for the recalculation of the work posture.

The current position or the current position and posture of the target object WK can be determined by using, for example, at least one of the work information of the target object WK acquired from the management server 400 and an imaging result of one of the two cameras 140 and 230. For example, when the work information includes the information indicating the relationship of the position or the position and posture between the floor marker FM and the target object WK, the current position of the floor marker FM in the robot coordinate system can be determined based on an image taken by the camera 240 of the moving pedestal 200, and the current position or the current position and posture of the target object WK in the robot coordinate system can be determined based on the current position or the current position and posture of the floor marker FM and the work information. On the other hand, when the work information includes the information indicating the positional relationship between the shelf marker SM and the target object WK, the current position of the shelf marker SM in the robot coordinate system can be determined based on an image taken by the camera 140 of the manipulator 100, and the current position or the current position and posture of the target object WK in the robot coordinate system can be determined based on the current position of the shelf marker SM and the work information. The current position or the current position and posture of the target object WK may be determined by using another method. For example, a stereo camera is used as the camera 140 of the manipulator 100, an image of the target object WK taken by the stereo camera is analyzed, and the current position or the current position and posture of the target object WK in the robot coordinate system may be determined.

In step S170, it is determined whether or not the work posture of the manipulator 100 obtained by the recalculation is a controllable posture. When the work posture is controllable, the processing proceeds to step S180 and the work is executed. On the other hand, when the work posture is not controllable, a worker is notified of an error in step S190, and the processing ends. The notification of the error is performed using, for example, a notification unit (not shown) such as a display unit or a speaker of the control device 150. After the processing of step S190, the stop position of the moving pedestal 200 may be changed and the processing may return to step S160.

When it is determined in step S170 that the work posture of the manipulator 100 obtained in step S160 is not the controllable posture, it is estimated that the change width of the target stop position performed in step S140 is insufficient. In this case, it is preferable to increase the change width of the target stop position in step S140 in order to execute the processing of FIG. 4 in subsequent work. An amount of increase of the change width may be set to a predetermined constant value, or may be determined by using a difference between the current position of the moving pedestal 200 and the target stop position. The current position of the moving pedestal 200 can be determined by, for example, determining a position of the floor marker FM in the robot coordinate system based on the image taken by the camera 240, and using the position of the floor marker FM and the information indicating the position of the floor marker FM in the world coordinate system acquired from the management server 400.

As described above, in the first embodiment, the target stop position is reset by repeating steps S120 to S140 until the manipulator 100 can take the controllable work posture at the plurality of stop candidate positions within the stop error range centered on the target stop position. As a result, the target stop position can be correctly set such that the robot system 10 can perform work on the target object WK within the stop error range of the target stop position.

### B. Second Embodiment

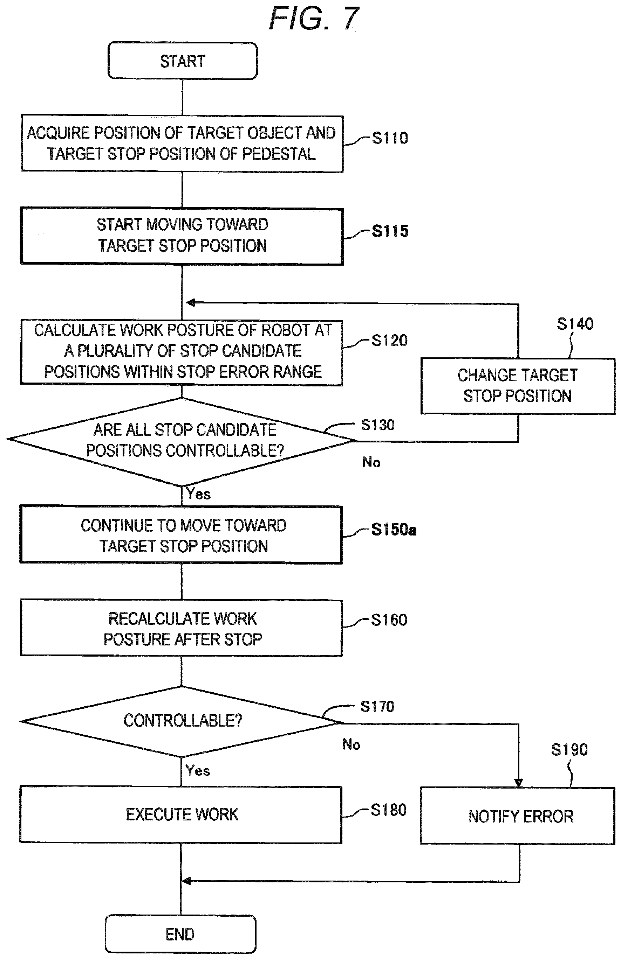

FIG. 7 is a flowchart of work involving resetting of a target stop position in a second embodiment. In the second embodiment, step S115 is added between step S110 and step S120 of FIG. 4 of the first embodiment, and a content of step S150 of FIG. 4 is changed. Other processings or device configurations are the same as those in the first embodiment.

In step S115, the moving pedestal 200 starts moving toward the target stop position of the moving pedestal 200 set in step S110, and the processing proceeds to step S120. That is, in the second embodiment, the resetting of the target stop position in steps S120 to S140 is executed during movement of the robot system 10. In this case, the target stop position can be reset during the movement, so that the work can be performed efficiently. When the resetting of the target stop position in steps S120 to S140 ends, in step S150a, the moving pedestal 200 continues to move to the target stop position. The step S160 and steps after step S160 are the same as those in the first embodiment.

As described above, in the second embodiment, the resetting of the target stop position is executed during the movement of the robot system 10, so that the work can be performed efficiently.

### C. Other Embodiments

The present disclosure is not limited to the embodiments described above, and may be implemented by various aspects without departing from the scope of the present disclosure. For example, the present disclosure can be implemented by the following aspects. In order to solve some or all of problems of the present disclosure, or to achieve some or all of effects of the present disclosure, technical characteristics in the above embodiments corresponding to technical characteristics in aspects described below can be replaced or combined as appropriate. In addition, when the technical characteristics are not described as essential in the present description, the technical characteristics can be appropriately deleted.

1. A first aspect of the present disclosure provides a control method for a mobile robot including a moving pedestal and a manipulator mounted on the moving pedestal. The control method includes: a step A of calculating, using a target stop position of the mobile robot for performing work on a target object, a stop error of the mobile robot, and a position of the target object, a work posture of the mobile robot with respect to the target object at a plurality of stop candidate positions within a stop error range centered on the target stop position; and a step B of changing the target stop position when the mobile robot is unable to take a controllable work posture at at least one stop candidate position among the plurality of stop candidate positions.

According to this control method, the target stop position can be correctly set such that the mobile robot can perform work on the target object within an error range of the target stop position.

2. According to the control method described above, in the step B, the target stop position may be changed such that the at least one stop candidate position where the controllable work posture is unable to be taken is not included in the stop error range after the change of the target stop position.

According to this control method, the target stop position can be changed such that the mobile robot can perform work on the target object within the error range of the target stop position.

3. The control method described above may include a step C of resetting the target stop position by repeating the steps A and B until the mobile robot is able to take the controllable work posture at the plurality of stop candidate positions.

According to this control method, the target stop position can be reset such that the mobile robot can perform work on the target object within the error range of the target stop position.

4. In the control method described above, the steps A, B and C are executed while the mobile robot is moving toward a position of the target object.

According to this control method, the target stop position can be reset during the movement, so that the work can be performed efficiently.

5. A second aspect of the present disclosure provides a control device for controlling a mobile robot including a moving pedestal and a manipulator mounted on the moving pedestal. The control device includes: a posture calculation unit that calculates, using a target stop position of the mobile robot for performing work on a target object, a stop error when movement of the mobile robot is stopped, and a position of the target object, a work posture of the mobile robot with respect to the target object at a plurality of stop candidate positions within a stop error range centered on the target stop position; and a position changing unit that changes the target stop position when the mobile robot is unable to take a controllable work posture at at least one stop candidate position among the plurality of stop candidate positions.

According to this control device, the target stop position can be correctly set such that the mobile robot can perform work on the target object within the error range of the target stop position.

6. A third aspect of the present disclosure provides a robot system including a mobile robot including a moving pedestal and a manipulator mounted on the moving pedestal, and a control device for controlling the mobile robot. The control device includes: a posture calculation unit that calculates, using a target stop position of the mobile robot for performing work on a target object, a stop error when movement of the mobile robot is stopped, and a position of the target object, a work posture of the mobile robot with respect to the target object at a plurality of stop candidate positions within a stop error range centered on the target stop position; and a position changing unit that changes the target stop position when the mobile robot is unable to take a controllable work posture at at least one stop candidate position among the plurality of stop candidate positions.

According to this robot system, the target stop position can be correctly set such that the mobile robot can perform work on the target object within the error range of the target stop position.

## Claims

1. A control method for a mobile robot including a moving pedestal and a manipulator mounted on the moving pedestal, the control method comprising:
a step A of calculating, using a target stop position of the mobile robot for performing work on a target object, a stop error of the mobile robot, and a position of the target object, a work posture of the mobile robot with respect to the target object at a plurality of stop candidate positions within a stop error range centered on the target stop position; and
a step B of changing the target stop position when the mobile robot is unable to take a controllable work posture at at least one stop candidate position among the plurality of stop candidate positions.

2. The control method according to claim 1, wherein
in the step B, the target stop position is changed such that the at least one stop candidate position where the controllable work posture is unable to be taken is not included in the stop error range after the change of the target stop position.

3. The control method according to claim 1, further comprising:
a step C of resetting the target stop position by repeating the steps A and B until the mobile robot is able to take the controllable work posture at the plurality of stop candidate positions.

4. The control method according to claim 1, wherein
the steps A and B are executed while the mobile robot is moving toward a position of the target object.

5. A control device that controls a mobile robot including a moving pedestal and a manipulator mounted on the moving pedestal, the control device comprising:
a posture calculation unit that calculates, using a target stop position of the mobile robot for performing work on a target object, a stop error when movement of the mobile robot is stopped, and a position of the target object, a work posture of the mobile robot with respect to the target object at a plurality of stop candidate positions within a stop error range centered on the target stop position; and
a position changing unit that changes the target stop position when the mobile robot is unable to take a controllable work posture at at least one stop candidate position among the plurality of stop candidate positions.

6. A robot system, comprising:
a mobile robot including a moving pedestal and a manipulator mounted on the moving pedestal; and
a control device that controls the mobile robot, wherein
the control device includes:
a posture calculation unit that calculates, using a target stop position of the mobile robot for performing work on a target object, a stop error when movement of the mobile robot is stopped, and a position of the target object, a work posture of the mobile robot with respect to the target object at a plurality of stop candidate positions within a stop error range centered on the target stop position; and
a position changing unit that changes the target stop position when the mobile robot is unable to take a controllable work posture at at least one stop candidate position among the plurality of stop candidate positions.
